# EUROPÄISCHE PATENTSCHRIFT

(11) **EP 2 044 277 B1**
(45) Veröffentlichungstag und Bekanntmachung des Hinweises auf die Patenterteilung: **16.05.2012**
(21) Anmeldenummer: 07765211.3
(22) Anmeldetag: 18.07.2007
(51) Int. Cl.: E05B 17/22, E05B 7/00, E05B 65/12, E05B 65/00, G01S 13/88

(54) **SCHLIESSSYSTEM FÜR FAHRZEUGE**
LOCKING SYSTEM FOR VEHICLES
SYSTÈME DE FERMETURE POUR VÉHICULES

(30) Priorität: 26.07.2006 DE 102006035223
(43) Veröffentlichungstag der Anmeldung: 08.04.2009
(73) Patentinhaber: Huf Hülsbeck & Fürst GmbH & Co. KG, 42551 Velbert (DE)
(72) Erfinder: PHILIPPECK, Thomas, 46562 Voerde-Spellen (DE)
(74) Vertreter: Patentanwälte Buse, Mentzel, Ludewig
(86) Internationale Anmeldenummer: PCT/EP2007/006341
(87) Internationale Veröffentlichungsnummer: WO 2008/012011

(56) Entgegenhaltungen:
- EP-A- 1 473 426
- WO-A-02/33203
- DE-A1- 10 007 500
- DE-A1- 10 208 573
- DE-A1- 10 255 439
- US-A1- 2003 031 025

## Beschreibung

Die Erfindung bezieht sich auf ein Schließsystem, der im Oberbegriff des Anspruches 1 angegebenen Art. Diese Schließsysteme basieren auf einer Datenkommunikation zwischen einem im Besitz einer berechtigten Person befindlichen Identifikationsgebers (ID-Geber) und einem im Fahrzeug befindlichen Identifikationsnehmer (ID-Nehmer), der einen Dateneingang und einen Datenausgang aufweist. Beim ID-Geber kann es sich um einen sogenannten elektronischen Schlüssel handeln. Der ID-Geber kann aber auch Bestandteil eines sogenannten "keyless-go"-Schließsystems sein.

Aus der DE 100 07 500 A1 ist ein solches "keyless-go"-Schließsystem bekannt. Die DE 102 08 573 A1 zeigt Radaranlagen zur Entfernungs- und Richtungsbestimmung von Gegenständen oder Personen in der Umgebung eines Fahrzeugs, die neben einer Datenkommunikation zwischen einem ID-Geber und einem ID-Nehmer vorgesehen sind.

Aus der WO 97/41322 und der DE 102 55 439 A1 sind Betätiger zur Verriegelung eines Schlosses bekannt, deren Sensorflächen sich an der Vorderseite der Handhabe befinden. Zugleich sind weitere Sensorflächen einer zur Entriegelung des Schlosses dienenden Einrichtung in Form von Elektroden in der Handhabe integriert.

Die DE 103 59 950 B4 zeigt eine Handhabe mit einem Tastschalter. In die Handhabe ist ein Lichterzeuger angeordnet, dessen Leuchtfläche in den Taster integriert ist. Der Erfindung liegt die Aufgabe zugrunde, ein raumsparendes Schließsystem der im Oberbegriff des Anspruches 1 genannten Art zu entwickeln. Dies wird durch die im Anspruch 1 genannten Maßnahmen erreicht, denen folgende besondere Bedeutung zukommt.

Die Erfindung schlägt vor, eine Baueinheit aus einem Radar-Ein- und -Ausgang und der Sensorfläche vom Verriegelungs-Betätiger herzustellen, die dann schauseitig eine Kombinations-Flächeneinheit aufweist und nachfolgend "Kombieinheit" bezeichnet werden soll. Das erlaubt einen kompakten Aufbau und die Anordnung an einem einzigen Ort in der Handhabe oder dem sichtbaren Bereich des angrenzenden Trägers. Der kompakte Aufbau spart kostbaren Platz ein und erleichtert die Handhabung bei der Montage.

Weitere Maßnahmen und Vorteile der Erfindung ergeben sich aus den Unteransprüchen, der nachfolgenden Beschreibung und den Zeichnungen. In den Zeichnungen ist die Erfindung in vier Ausführungsbeispielen dargestellt. Es zeigen:

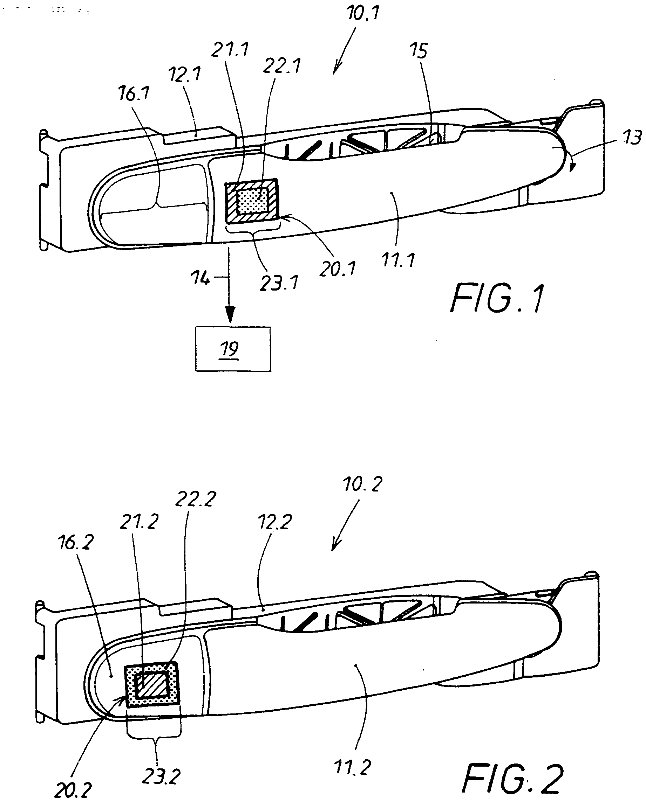

- Fig. 1 - 4,: in übereinstimmender perspektivischer Darstellung, vier Alternativen zur Ausbildung der erfindungsgemäßen Kombieinheit.

In den Fig. 1 bis 4 ist von dem erfindungsgemäßen Schließsystem lediglich die an einer Fahrzeugtür anzubringende Baugruppe 10.1 bis 10.4 gezeigt, die aus einer Handhabe 11.1 bis 11.4 einerseits und einem Träger 12.1 bis 12.4 andererseits besteht. Der Zusammenhang dieser Bauteile soll anhand der Fig. 1 näher erläutert werden.

Die Handhabe 11.1 ist im zugehörigen Träger 12.1 an ihrem einen Ende schwenkgelagert und bildet einen sogenannten "Ziehgriff". Bei Betätigung wird der Ziehgriff 11.1 im Träger 12.1 im Sinne des Betätigungspfeils 13 verschwenkt. Dann wird ein Wirkimpuls im Sinne des Pfeils 14 zu einem in Fig. 1 nur symbolisch angedeutetem Schloss 19 in der Tür weitergegeben, welches dann die Tür zum Öffnen freigibt, wenn das Schloss sich in seiner Entriegelungsstellung befindet.

Die Baugruppe 10.1 ist auch mit einer elektrischen Stromversorgung und mit elektrischen Steuerleitungen versehen, die zu einer Verriegelungs-Einrichtung und zu einer Entriegelungseinrichtung gehören. Zugehörige Bauteile sind im Bereich der Baugruppe 10.1 vorgesehen. Zur Entriegelungseinrichtung gehört ein nicht näher gezeigter Entriegelungs-Sensor, dessen Sensorfläche in Form einer kapazitiven Elektrode im Innenbereich 15 der Handhabe 11.1 angeordnet ist, welcher dem Träger 12.1 zugekehrt ist.

Dann gibt es aber vor allem einen Betätiger für die Verriegelungs-Einrichtung, deren Sensorfläche 21.1 zu einer noch näher zu erläuternden Baueinheit 20.1 gehört und dort durch Punktschraffur hervorgehoben ist. Ein weiterer Bestandteil der Baueinheit 20.1 ist der Ein- und Ausgang einer Sende- und Empfangseinrichtung zur Abstands-und Entfernungsbestimmung eines Gegenstandes oder einer Person bezüglich des Fahrzeugs, die auf Basis von elektromagnetischen oder akustischen Wellen arbeitet. Außer der Entfernung kann auch die Richtung des die Wellen zurückwerfenden Gegenstandes bzw. der Person dieser Einrichtung ermittelt werden, die nachfolgend kurz "Radar-Einrichtung" bezeichnet werden soll.

Der Radar-Ein- und -Ausgang 22.1 ist in Fig. 1 durch Linienschraffur in der Baueinheit 20.1 hervorgehoben. Die Baueinheit 20.1 ist an jenem Ende der Handhabe 11.1 integriert, welches dem Schwenklager des Ziehgriffs 11.1 zugekehrt ist. Auf der Schauseite des Ziehgriffs erscheint die nach außen wirksame, durch die erwähnte Schraffur hervorgehobene Kombinations-Flächen-Einheit 23.1, die nachfolgend kurz "Kombieinheit" bezeichnet werden soll. Bei der Kombieinheit 23.1 ist die Sensorfläche 21.1 als eine Ringzone ausgebildet, in deren Inneren der Radar-Ein-und -Ausgang angeordnet ist. Zur besseren Platznutzung füllt der Radar-Ein- und - Ausgang 22.1 den ganzen Zentralbereich der Ringzone der Sensorfläche 21.1 aus.

Der Träger 12.1 wird normalerweise im Türinneren auf der Innenseite der Türaußenverkleidung befestigt. Auf der Schauseite der Türaußenverkleidung erscheint dann vom Träger nur ein mit 16.1 bezeichneter Bereich, in dem bedarfsweise ein Schließzylinder für einen mechanischen Schlüssel angeordnet sein kann.

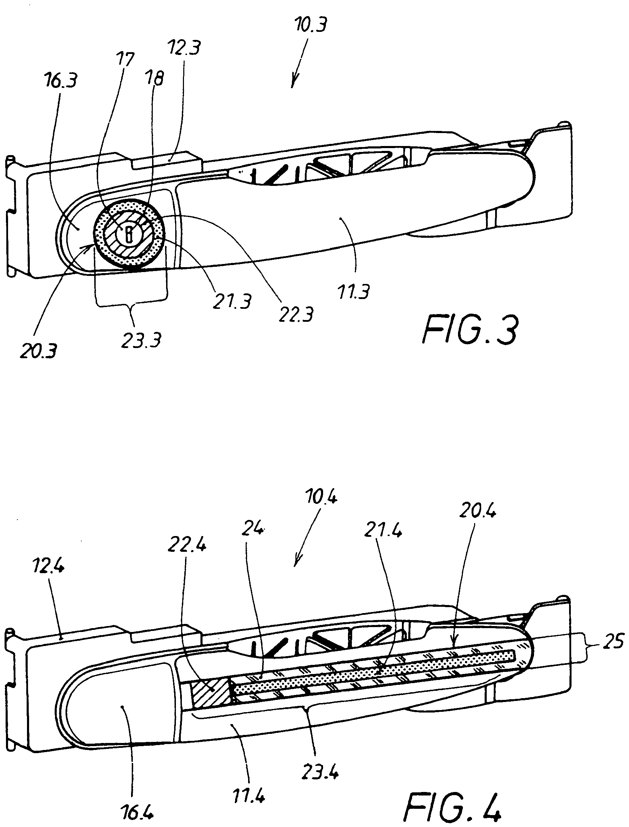

Die Fig. 2 zeigt in gleicher Darstellung eine Alternative zu Fig. 1, wo zur Benennung analoger Bauteile die gleichen Bezugszeichen wie in Fig. 1 verwendet werden, weshalb insoweit die bisherige Beschreibung gilt. Zu ihrer Unterscheidung sind die Bezugszeichen mit .2 gekennzeichnet. Das gilt sinngemäß auch für die Fig. 3 und 4. Es genügt lediglich auf die Unterschiede einzugehen.

Auch in Fig. 2 ist die Kombieinheit 23.1 in analoger Weise wie in Fig. 1 ausgebildet, allerdings wird hier die Ringzone von der Sensorfläche 21.2 gebildet, während das ganze Ringinnere vom Radar-Ein- und -Ausgang 22.2 ausgefüllt ist. Ein weiterer Unterschied zur Fig. 1 besteht darin, dass in Fig. 2 die zugehörige Baueinheit 20.2 nicht im dortigen Ziehgriff 21.2, sondern in dem nebengeordneten sichtbaren Bereich 16.1 des zugehörigen Trägers 12.2 angeordnet ist. In Fig. 1 und 2 sind die jeweiligen Ringzonen 21.1 bzw. 22.2 rechteckförmig gestaltet, weshalb auch der Radar-Ein- und -Ausgang 22.1 in Fig. 1 und die Sensorfläche 21.2 in Fig. 2 als Rechtecke ausgebildet sind.

Die Fig. 3 ist eine Abwandlung von Fig. 2. Auch in Fig. 3 befindet sich die Kombieinheit 23.3 im dortigen sichtbaren Bereich 16.3 des Trägers 12.3. Auf der Schauseite der dortigen Baueinheit 20.3 sind sowohl die Sensorfläche 21.3 als auch der Radar-Ein- und -Ausgang 22.3 in Form von konzentrischen Ringzonen angeordnet und in der Ringmitte ist ein Schließzylinder angeordnet. Von dem Schließzylinder ist lediglich das Stirnende 17 zu erkennen. Am Stirnende 17 befindet sich eine Eintrittsöffnung 18 für einen mechanischen Schlüssel. Der Ausgang des nicht näher gezeigten Schließzylinders ist mit dem zugehörigen Schloss in mechanischer Verbindung. Bei Schlüsselbetätigungen wird das Schloss zwischen seiner Verriegelungsstellung und seiner Entriegelungsstellung umgesteuert.

Der mechanische Schlüssel wird nur im Notfall verwendet, wenn die Fernbedienung des erfindungsgemäßen Schließsystems versagt. Diese Fernbedienung erfolgt über eine Datenkommunikation zwischen einem im Besitz der berechtigten Person befindlichen, nicht näher gezeigten Identifikationsgeber (ID-Geber) und einem im Fahrzeug befindlichen Identifikationsnehmer (ID-Nehmer), der einen Dateneingang und einen Datenausgang hat. Auch dieser Dateneingang und Datenausgang können im Bereich der jeweiligen Baueinheit 10.1 bis 10.4 angeordnet sein. Die Datenkommunikation findet normalerweise auf elektromagnetischem Wege statt.

Im Ausführungsbeispiel von Fig. 4 ist die Baueinheit 20.4 in die dortige Handhabe 11.4 integriert, weshalb auf der Schauseite wieder die Kombieinheit 23.4 erscheint. Die Baueinheit 20.4 ist in Fig. 4 durch einen nicht näher gezeigten Lichterzeuger erweitert, dessen sichtbare Leuchtfläche 24 in der Kombieinheit 23.4 erscheint. Wenn sich die berechtigte Person, die im Besitz des ID-Gebers ist, dem Fahrzeug nähert, kann bei einer bestimmten Annäherung der Lichterzeuger eingeschaltet werden, wodurch die Leuchtfläche 24 erstrahlt und in der Dunkelheit kundbar macht, wo sich die Handhabe 11.4 befindet.

In Fig. 4 ist die Leuchtfläche 24 halbrahmenartig ausgebildet, wobei im Rahmen-Inneren sich wieder die durch Punktschraffur hervorgehobene Sensorfläche 21.4 befindet. Als vierter verbreiterter Rahmensteg der Leuchtfläche 24 ist wieder der durch Strichschraffur hervorgehobene Radar-Ein- und -Ausgang 22.4 angeordnet. Diese erweiterte Kombieinheit 23.4 erscheint als linearer Streifen 25 auf der Schauseite der Handhabe 11.4. Alternativ könnte man die Kombieinheit 23.4 natürlich auch wieder in den sichtbaren Bereich 16.4 vom dortigen Träger 12.4 anordnen. Die Anordnung der Elemente 21.4, 22.4 und 24 könnte auch anders im Streifen 25 angeordnet sein.

### Bezugszeichenliste :

- 10.1: Baugruppe (Fig. 1)
- 10.2: Baugruppe (Fig. 2)
- 10.3: Baugruppe (Fig. 3)
- 10.4: Baugruppe (Fig. 4)
- 11.1: Handhabe, Ziehgriff (Fig. 1)
- 11.2: Handhabe, Ziehgriff (Fig. 2)
- 11.3: Handhabe, Ziehgriff (Fig. 3)
- 11.4: Handhabe, Ziehgriff (Fig. 4)
- 12.1: Träger für 11.1 (Fig. 1)
- 12.2: Träger für 11.2 (Fig. 2)
- 12.3: Träger für 11.3 (Fig. 3)
- 12.4: Träger für 11.4 (Fig. 4)
- 13: Betätigungspfeil von 11.1 (Fig. 1)
- 14: Pfeil des Wirkimpulses von 11.1 auf 19 (Fig. 1)
- 15: Innenbereich von 11.1
- 16.1: sichtbarer Bereich von 12.1 (Fig. 1)
- 16.2: sichtbarer Bereich von 12.2 (Fig. 2)
- 16.3: sichtbarer Bereich von 12.3 (Fig. 3)
- 16.4: sichtbarer Bereich von 12.4 (Fig. 4)
- 17: Stirnende vom Schließzylinder (Fig. 3)
- 18: Eintrittsöffnung in 17 (Fig. 3)
- 19: Schloss (Fig. 1)
- 20.1: Baueinheit (Fig. 1)
- 20.2: Baueinheit (Fig. 2)
- 20.3: Baueinheit (Fig. 3)
- 20.4: Baueinheit (Fig. 4)
- 21.1 1: Sensorfläche des Verriegelungsbetätigers (Fig. 1)
- 21.2: Sensorfläche des Verriegelungsbetätigers (Fig. 2)
- 21.3: Sensorfläche des Verriegelungsbetätigers (Fig. 3)
- 21.4: Sensorfläche des Verriegelungsbetätigers (Fig. 4)

- 22.1: Radar-Ein- und -Ausgang (Fig. 1)
- 22.2: Radar-Ein- und -Ausgang (Fig. 2)
- 22.3: Radar-Ein- und -Ausgang (Fig. 3)
- 22.4: Radar-Ein- und -Ausgang (Fig. 4)
- 23.1: Kombieinheit von 21.1, 22.1 (Fig. 1)
- 23.2: Kombieinheit von 21.2, 22.2 (Fig. 2)
- 23.3: Kombieinheit von 21.3, 22.3 (Fig. 3)
- 23.4: Kombineinheit von 21.4, 22.4 und 24 (Fig. 4)
- 24: Leuchtfläche (Fig. 4)
- 25: Streifen aus 23.4 (Fig. 4)

## Patentansprüche

1. Schließsystem für Fahrzeuge mit einem Schloss (19), das zwischen einer Verriegelungsstellung und einer Entriegelungsstellung umsteuerbar ist,
mit einer Handhabe (11.1) zum Betätigen des Schlosses (19), die über einen Träger (12.1) an einer Tür oder Klappe des Fahrzeugs angeordnet ist,
wobei in der Verriegelungsstellung die Handhabe (11.1) unwirksam gesetzt ist, während sie in der Entriegelungsstellung wirksam ist und bei Betätigung der Handhabe (11.1) die Tür bzw. Klappe öffnet,
mit einer Datenkommunikation zwischen einem im Besitz der berechtigten Person befindlichen Identifikationsgeber (ID-Geber) und einem im Fahrzeug befindlichen Identifikationsnehmer (ID-Nehmer), der einen Dateneingang und Datenausgang hat,
mit einem Komparator, der die Übereinstimmung der Daten zwischen dem ID-Geber und ID-Nehmer ermittelt,
wobei im Bereich der Handhabe (11.1) zwar eine Sensorfläche eines Betätigers zur Verriegelung des Schlosses (19) (Verriegelungs-Betätiger) angeordnet ist, der Verriegelungs-Betätiger aber nur bei übereinstimmendem Datenergebnis im Komparator wirksam gesetzt wird,
und mit einer Sende- und Empfangseinrichtung (Radar-Einrichtung) für elektromagnetische oder akustische Wellen zur Abstands- und Entfernungsbestimmung eines Gegenstandes bzw. einer Person gegenüber dem Fahrzeug, deren Radar-Ein- und -Ausgang (22.1) im Bereich der Handhabe (11.1) angeordnet ist,
**dadurch gekennzeichnet ,**
**dass** der Radar-Ein- und -Ausgang (22.1) einerseits und die Sensorfläche (21.1) vom Verriegelungs-Betätiger andererseits zu einer vorgefertigten Baueinheit (20.1) zusammengefasst sind und schauseitig eine Kombinations-Flächen-Einheit (23.1) (Kombieinheit) bilden
und **dass** diese Kombieinheit (23.1) sich an der Handhabe (11.1) selbst oder in einem der Handhabe (11.1) benachbarten sichtbaren Bereich (16.1) ihres Trägers (12.1) befindet.

2. Schließsystem nach Anspruch 1, **dadurch gekennzeichnet, dass** die Sensorfläche (22.1) oder der Radar-Ein- und Ausgang (22.1) in der Kombieinheit (23.2; 23.1) eine Ringzone ist, welche den im Ringzonen-Inneren angeordneten Radar-Ein- und -Ausgang (21.2 oder 22.1) umschließt.

3. Schließsystem nach Anspruch 2, **dadurch gekennzeichnet, dass** der Radar-Ein-und -Ausgang (21.2 oder 22.1) den ganzen Zentralbereich der Ringzone ausfüllt.

4. Schließsystem nach einem der Ansprüche 1 bis 3, **dadurch gekennzeichnet, dass** die Ringzone (21.1; 22.2) quadratische oder rechteckförmige Form hat.

5. Schließsystem nach Anspruch 1, **dadurch gekennzeichnet, dass** die beiden Teile (21.3, 22.3) der Kombieinheit (23.3) in zwei konzentrischen Ringzonen angeordnet sind,
dass die beiden Ringzonen (21.3, 22.3) das sichtbare Stirnende (17) des Schließzylinders gemeinsam umschließen,
wobei der Schließzylinder in einem von der Türaußenseite aus sichtbaren Bereich (16.3) des Handhaben-Trägers (12.3) angeordnet ist.

6. Schließsystem nach einem der Ansprüche 1 bis 5, **dadurch gekennzeichnet, dass** die Kombieinheit (23.4) erweitert ist und auch noch eine Leuchtfläche (24) umfasst, die als Licht-Ausgang eines Lichterzeugers fungiert,
und dass die Leuchtfläche (24) in der Handhabe (11.4) oder im benachbarten, sichtbaren Bereich des Trägers (12.4) angeordnet ist.

7. Schließsystem nach Anspruch 6, **dadurch gekennzeichnet, dass** die Leuchtfläche (24) der erweiterten Kombieinheit (23.4) rahmenartig oder halbrahmenartig die Sensorfläche (21.4) vom Verriegelungs-Betätiger und/oder den Radar-Ein- und -Ausgang umschließt.

8. Schließsystem nach Anspruch 6, **dadurch gekennzeichnet, dass** der Radar-Ein-und -Ausgang (22.4), die Sensorfläche (21.4) vom Verriegelungs-Betätiger und die Leuchtfläche (24) der erweiterten Kombieinheit (23.4) teilweise nebeneinander liegen und einen Streifen (25) bilden
und dass dieser Streifen (25) sich wenigstens über ein Teilstück der Länge der Handhabe (11.4) erstreckt.

9. Schließsystem nach einem der Ansprüche 1 bis 8, **dadurch gekennzeichnet, dass** außer der Kombieinheit (23.1 bis 23.4) auch ein Sensor zur Entriegelung des Schlosses (19) (Entriegelungs-Sensor) in der Handhabe (11.1 bis 11.4) oder in einem benachbarten Außenbereich (16.1 bis 16.4) des Handhaben-Trägers (12.1 bis 12.4) angeordnet ist.

10. Schließsystem nach Anspruch 9, **dadurch gekennzeichnet, dass** eine Sensorfläche des Entriegelungs-Sensors des Schlosses in jenem Innenbereich (15) der Handhabe (11.1) angeordnet ist, welcher der Tür zugekehrt ist.

11. Schließsystem nach einem der Ansprüche 1 bis 10, **dadurch gekennzeichnet, dass** die Sensorfläche (21.1 bis 21.4) vom Verriegelungs-Betätiger ein Tastbetätiger eines elektrischen Schalters ist.

12. Schließsystem nach einem der Ansprüche 1 bis 10, **dadurch gekennzeichnet, dass** der Verriegelungs-Betätiger kapazitiv wirksam ist und seine Sensorfläche (21.1 bis 21.4) aus einer kapazitiven Elektrode besteht.

13. Schließsystem nach einem der Ansprüche 1 bis 10, **dadurch gekennzeichnet, dass** die Sensorfläche (21.1 bis 21.4) vom Verriegelungs-Betätiger Bestandteil eines Piezoelements ist.

14. Schließsystem nach einem der Ansprüche 1 bis 10, **dadurch gekennzeichnet, dass** die Sensorfläche (21.1 bis 21.4) vom Verriegelungs-Betätiger Bestandteil eines Hallelements ist.

15. Schließsystem nach einem der Ansprüche 1 bis 10, **dadurch gekennzeichnet, dass** die Sensorfläche (21.1 bis 21.4) vom Verriegelungs-Betätiger Bestandteil eines Reedkontakts ist.

## Claims

1. Locking system for vehicles, with a lock (19) which is reversible between a lock setting and an unlock setting,
with, for operating the lock (19), an operating handle (11.1) arranged by means of a bracket (12.1) on a door or flap of the vehicle,
whereby in the lock setting the operating handle (11.1) is set to be inoperative, whereas in the unlock setting it is operative, and by actuating the operating handle (11.1) the door, i.e., flap opens,
with a data communication between an identification transponder (ID transponder) in the possession of the authorized person and an identification receiver (ID receiver) which has a data input and data output and is found in a vehicle,
with a comparator which detects the compliance of the data between ID transponder and ID receiver,
whereby although a sensor surface of an actuator for locking the lock (19) (lock actuator) is arranged in the area of the operating handle (11.1), the lock actuator will only be set to be operative when the data in the comparator has been identified as compliant,
and with a transmitting and receiving device (radar device) for electromagnetic or acoustic waves for determining the clearance and distance of an object, i.e., person from the vehicle wherein the radar inlet and outlet (22.1) is arranged in the area of the operating handle (11.1),
thereby **characterized,**
**in that** the radar inlet and outlet (22.1) on the one hand and the sensor surface (21.1) of the locking actuator on the other are combined into a prefabricated component (20.1) and obversely form a combination surface unit (23.1) (combination unit),
and **in that** this combination unit (23.1) is found in the operating handle (11.1) itself or in a visible area (16.1) of its bracket (12.1) adjacent to the operating handle (11.1).

2. Locking system pursuant to Claim 1, thereby **characterized in that** the sensor surface (21.1) or the radar inlet and outlet (22.1) in the combination unit (23.2; 23.1) is a ring zone which encloses the radar inlet and outlet (21.2 or 22.1) arranged inside the ring zone.

3. Locking system pursuant to Claim 2, thereby **characterized in that** the radar inlet and outlet (21.2 or 22.1) fills the entire central area of the ring zone.

4. Locking system pursuant to one of the claims I to 3, thereby **characterized in that** the ring zone (21.1; 22.2) has a quadratic or rectangular form.

5. Locking system pursuant to Claim 1, thereby **characterized in that** both parts (21.3, 22.3) of the combination unit (23.3) are arranged in two concentric ring zones,
and **in that** both ring zones (21.3, 22.3) mutually encompass the visible front end (17) of the lock cylinder,
whereby the lock cylinder is arranged in an area (16.3) of the operating handle bracket (12.3) which is visible from the door exterior.

6. Locking system pursuant to one of the claims 1 to 5, thereby **characterized in that** the combination unit (23.4) is extended and includes yet another light area (24) which functions as light outlet for a light generator,
and **in that** the light area (24) is arranged in the operating handle (11.4) or in the adjacent visible area of the bracket (12.4).

7. Locking system pursuant to Claim 6, thereby **characterized in that** the light area (24) of the extended combination unit (23.4) encloses, frame-like or semi-frame-like, the sensor surface (21.4) of the lock actuator and/or the radar in- and outlet.

8. Locking system pursuant to Claim 6, thereby **characterized in that** the radar in-and outlet (22.4), the sensor surface (21.4) of the lock actuator and the light area (24) of the extended combination unit (23.4) are partially adjacent and form a strip (25),
and **in that** this strip (25) extends at least over a section of the length of the operating handle (11.4).

9. Locking system pursuant to one of the claims 1 to 8, thereby **characterized in that** besides the combination unit (23.1 to 23.4), likewise a sensor for unlocking the lock (19) (unlock sensor) is arranged in the operating handle (11.1 to 11.4) or in an adjacent area (16.1 to 16.4) of the operating handle bracket (12.1 to 12.4).

10. Locking system pursuant to Claim 9, thereby **characterized in that** a sensor surface of the unlock sensor of the lock is arranged **in that** particular interior area (15) of the operating handle (11.1) which faces the door.

11. Locking system pursuant to one of the claims 1 to 10, thereby **characterized in that** the sensor surface (21.1 to 21.4) of the lock actuator is a button actuator of an electric switch.

12. Locking system pursuant to one of the claims 1 to 10, thereby **characterized in that** the lock actuator works capacitively and its sensor surface (21.1 to 21.4) comprises a capacitive electrode.

13. Locking system pursuant to one of the claims I to 10, thereby **characterized in that** the sensor surface (21.1 to 21.4) of the lock actuator is a component of a piezo element.

14. Locking system pursuant to one of the claims 1 to 10, thereby **characterized in that** the sensor surface (21.1 21.4) of the lock actuator is a component of a Hall generator.

15. Locking system pursuant to one of the claims 1 to 10, thereby **characterized in that** the sensor surface (21.1 to 21.4) of the lock actuator is a component of a reed contact.

## Revendications

1. Système de fermeture pour véhicules comprenant une serrure (19) qu'il est possible de commuter entre une position verrouillée et une position déverrouillée,
avec une manette (11.1) servant à actionner la serrure (19), manette qui est agencée via un support (12.1) contre une porte ou un ouvrant du véhicule,
sachant qu'en position verrouillée la manette (11.1) est inopérante, tandis qu'elle est opérante en position déverrouillée et que la porte ou l'ouvrant s'ouvre lorsqu'on actionne la manette (11.1),
comprenant une communication de données entre un émetteur d'identification (émetteur ID) en possession de la personne ayant droit, et un récepteur d'identification (récepteur ID) situé dans le véhicule, qui comporte une entrée de données et une sortie de donnés,
comprenant un comparateur qui détermine si les données concordent entre l'émetteur d'ID et le récepteur d'ID,
sachant que dans la zone de la manette (11.1) est certes agencée la surface sensible d'un actionneur servant à verrouiller la serrure (19) (actionneur du verrouillage), mais que l'actionneur de verrouillage n'est activé que si le résultat de comparaison des données concorde dans le comparateur,
et comprenant un équipement émetteur et récepteur (équipement radar) des ondes électromagnétiques ou acoustiques afin de déterminer l'écart et la distance d'un objet ou d'une personne par rapport au véhicule, dont l'entrée et la sortie radar (22.1) sont agencées dans la zone de la manette (11.1),
**caractérisé en ce que**
l'entrée et la sortie radar (22.1) d'une part et la surface sensible (21.1) de l'actionneur du verrouillage d'autre part sont réunies en une unité constructive (20.1) préfabriquée et forment du côté visible une unité à surfaces combinées (23.1) (unité combinée)
et **en ce que** cette unité combinée (23.1) se trouve contre la manette (11.1) elle-même ou dans une zone visible (16.1) de son support (12.1) voisine de la manette (11.1).

2. Système de fermeture selon la revendication 1, **caractérisé en ce que** la surface sensible (21.1) ou l'entrée et la sortie radar (22.1) dans l'unité combinée (23.2 ; 23.1) est une zone annulaire qui entoure l'entrée et la sortie radar (21.2 ou 22.1) agencée à l'intérieur de la zone annulaire.

3. Système de fermeture selon la revendication 2, **caractérisé en ce que** l'entrée et la sortie radar (21.2 ou 22.1) remplit toute la partie centrale de la zone annulaire.

4. Système de fermeture selon la revendication 1 à 3, **caractérisé en ce que** la zone annulaire (21.1 ; 22.2) présente une forme carrée ou rectangulaire.

5. Système de fermeture selon la revendication 1, **caractérisé en ce que** les deux pièces (21.3, 22,3) de l'unité combinée (23.3) sont agencées dans deux zones annulaires concentriques,
**en ce que** les deux zones annulaires (21.3, 22.3) entourent ensemble l'extrémité frontale (17) visible du cylindre de fermeture,
sachant que le cylindre de fermeture est agencé dans une zone (16.3) du support (12.3) de la manette, zone qui est visible depuis le côté extérieur de la porte.

6. Système de fermeture selon l'une des revendications 1 à 5, **caractérisé en ce que** l'unité combinée (23.4) est élargie et comprend en plus une surface lumineuse (24) officiant de sortie de lumière d'un générateur de lumière,
et **en ce que** la surface lumineuse (24) est agencée dans la manette (11.4) ou dans la zone voisine visible du support (12.4).

7. Système de fermeture selon la revendication 6, **caractérisé en ce que** la surface lumineuse (24) de l'unité combinée (23.4) élargie entoure comme un cadre ou un demi-cadre la surface sensible (21.4) de l'actionneur du verrouillage et/ou l'entrée et la sortie radar.

8. Système de fermeture selon la revendication 6, **caractérisé en ce que** l'entrée et la sortie radar (22.4), la surface sensible (21.4) de l'actionneur de verrouillage et la surface lumineuse (24) de l'unité combinée élargie (23.4) sont en partie juxtaposés et forment un ruban (25)
et **en ce que** ce ruban (25) s'étend au moins sur une partie de la longueur de la manette (11.4).

9. Système de fermeture selon l'une des revendications 1 à 8, **caractérisé en ce qu'**hormis l'unité combinée (23.1 à 23.4), un capteur de déverrouillage de la serrure (19) (capteur de déverrouillage) est agencé dans la manette (11.1 à 11.4) ou dans une zone extérieure voisine (16.1 à 16.4) du support (12.1 à 12.4) de la manette.

10. Système de fermeture selon la revendication 9, **caractérisé en ce qu'**une surface sensible du capteur de déverrouillage de la serrure est agencée dans la zone intérieure (15) de la manette (11.1) qui regarde la porte.

11. Système de fermeture selon l'une des revendications 1 à 10, **caractérisé en ce que** la surface sensible (21.1 à 21.4) de l'actionneur de verrouillage est un actionneur à touche d'un commutateur électrique.

12. Système de fermeture selon l'une des revendications 1 à 10, **caractérisé en ce que** l'actionneur de verrouillage agit capacitivement et que sa surface sensible (21.1 à 21.4) se compose d'une électrode capacitive.

13. Système de fermeture selon l'une des revendications 1 à 10, **caractérisé en ce que** la surface sensible (21.1 à 21.4) de l'actionneur de verrouillage fait partie intégrante d'un élément piézoélectrique.

14. Système de fermeture selon l'une des revendications 1 à 10, **caractérisé en ce que** la surface sensible (21.1 à 21.4) de l'actionneur de verrouillage fait partie intégrante d'un élément à effet Hall.

15. Système de fermeture selon l'une des revendications 1 à 10, **caractérisé en ce que** la surface sensible (21.1 à 21.4) fait partie intégrante d'un contact à lames souples.
